# EUROPÄISCHE PATENTSCHRIFT

(11) **EP 1 612 103 B1**
(45) Veröffentlichungstag und Bekanntmachung des Hinweises auf die Patenterteilung: **27.12.2006**
(21) Anmeldenummer: 05105302.3
(22) Anmeldetag: 16.06.2005
(51) Int. Cl.: B60Q 1/14, B60Q 1/40

(54) **Spieloptimierte Aufnahme für Schaltstück**
Receiving part with optimal axial play for a moving part of a switch
Dispositif avec jeu optimal pour la réception d'une part mobile d'un interrupteur

(30) Priorität: 30.06.2004 DE 102004031586
(43) Veröffentlichungstag der Anmeldung: 04.01.2006
(73) Patentinhaber: Valeo Schalter und Sensoren GmbH, 74321 Bietigheim-Bissingen (DE)
(72) Erfinder: Lipfert, Rainer, 74076 Heilbronn (DE); Simonis, Karl, 75428 Illingen (DE); Hasch, Martin, 71701 Schwieberdingen (DE); Grüner, Roland, 71732 Tamm (DE); Binder, Bernd, 74372 Sersheim (DE)
(74) Vertreter: Croonenbroek, Thomas Jakob

(56) Entgegenhaltungen:
- WO-A-96/23675
- DE-A1- 10 256 785
- DE-A1- 19 935 089
- US-A- 5 708 243

## Beschreibung

Die Erfindung betrifft einen Schalter, insbesondere einen Lenkstockschalter für ein Fahrzeug, der eine Steuerkulisse und einen mindestens teilweise in einer hülsenartigen Führung gelagerten Nocken umfasst, wobei der Nocken in axialer Richtung in der Führung bewegbar ist, einen mindestens teilweise innerhalb der Führung geführten Anlageabschnitt aufweist uns einen der Steuerkulisse zugewandten und mit der Steuerkulisse zusammenwirkenden Nockenabschnitt aufweist.

Derartige Schalter finden ihren Einsatz in vielen Bereichen der Technik. Mit einem solchen, vorzugsweise für ein Kraftfahrzeug vorgesehenen Schalter, wie aus US-A-5 708 243 bekannt, können z.B. die verschiedenen Funktionen der Beleuchtungsanlage, der Fahrtrichtungsanzeigeanlage und/oder der Scheibenwischanlage realisiert werden. Zur Realisierung der Funktionen wird dabei ein den Nocken und die Führung umfassendes Schaltstück über ein Betätigungselement in verschiedene Funktionsstellungen gebracht. Die Funktionsstellungen können tastend und/oder rastend ausgeführt sein. Je nach Funktionsstellung werden in Wirkverbindung mit dem Schaltstück stehende Funktionselemente betätigt.

Insbesondere bei Lenkstockschaltern von Kraftfahrzeugen treten beim Betätigen des Betätigungselements Querkräfte auf den mit der Steuerkulisse zusammenwirkenden Nocken auf, die ein Verklemmen des Nockens in der Führung zur Folge haben können. Eine möglichst spielfreie Lagerung des Nockens innerhalb der Führung ist daher wünschenswert, um die Gefahr des Verklemmens des Nockens innerhalb der Führung zu verringern. Ferner ist es zum Zweck der Realisierung von exakt definierten Funktionsstellungen aufgrund des üblicherweise relativ lang ausgeführten Betätigungselements notwendig, ein möglichst spielfreies Zusammenwirken des Schaltstücks bzw. des Nockenabschnitts mit der Steuerkurve zu gewährleisten und damit auch die Haptik des Betätigungselements beim Schaltvorgang zu verbessern, so dass genau definierte Schaltstellungen mittels des Betätigungselements ohne Spiel anwählbar sind.

Der vorliegenden Erfindung liegt deshalb die Aufgabe zugrunde, einen Schalter der eingangs beschriebenen Art derart weiterzubilden, dass der Nocken möglichst spielfrei in dem Schaltstück bzw. in der Führung geführt ist, ohne dass der Einsatz von aufwändigen Mitteln notwendig ist.

Diese Aufgabe wird bei einem Schalter der eingangs beschriebenen Art erfindungsgemäß dadurch gelöst, dass der Anlageabschnitt im Querschnitt wenigstens annähernd kreisförmig ausgestaltet ist und dass die Innenseite der Führung im Querschnitt wenigstens eines mit dem Anlageabschnitt zusammenwirkenden Führungsabschnitts annähernd polygonartig angeordnete und den Anlageabschnitt spielfrei berührende Berührungsflächen aufweist. Der in der Führung geführte Nocken berührt die Führung im wesentlichen lediglich mit dem im Querschnitt kreisförmigen Anlageabschnitt und damit in relativ kleinen Bereichen der Berührungsflächen des Führungsabschnitts. Damit kann eine spielfreie Führung des Nockens innerhalb der Führung realisiert werden und gleichzeitig die Reibung zwischen dem Nocken und der Führung möglichst gering gehalten werden, so dass eine axiale Bewegung des Nockens innerhalb der Führung besonders gut möglich ist. Dabei sind die im Querschnitt annähernd polygonartig angeordneten Berührungsflächen des Führungsabschnitts beispielsweise annähernd als ein Dreieck, Vierreck oder Fünfeck ausgebildet. Durch die Wahl des Polygons wird die Anzahl der Berührungsflächen bestimmt, was wiederum einen Einfluss auf die bei einer axialen Bewegung des Nockens innerhalb der Führung entstehenden Reibungskräfte hat. Sind die Berührungsflächen als Dreieck angeordnet, kann eine besonders geringe Reibungskraft zwischen dem Anlageabschnitt und den Berührungsflächen bei einer definierten Anlage des Anlageabschnitts an den Berührungsflächen realisiert werden. Eine geringe Reibungskraft ermöglicht einen besonders leichtgängigen Schaltvorgang und ein besonders präzises Zusammenwirken des Nockenabschnitts mit der Steuerkulisse und trägt außerdem zu einer Reduzierung des Verschleißes bei.

Aufgrund des kreisartigen Querschnitts des Anlageabschnitts bleibt ferner die Möglichkeit einer Drehbarkeit des Nockens innerhalb der Führung um die Längsachse des Nockens bestehen. Dies kann insbesondere bei einem Zusammenbau des Schalters von Vorteil sein, da der Nocken bei einem Einführen in die Führung nicht an eine bestimmte Drehposition bezüglich der Längsachse des Nockens gebracht werden muss.

Vorteilhafterweise verläuft die Berührung zwischen Anlageabschnitt und Berührungsflächen wenigstens weitgehend linienartig in axialer Richtung. Die Berührungsflächen berühren den Anlageabschnitt weitgehend tangential. Insgesamt wird die Fläche, in denen die Berührungsflächen den Anlageabschnitt tatsächlich berühren, damit besonders klein. Somit können die Reibungskräfte bei einer tangentialen Bewegung des Nockens innerhalb der Führung weiter verringert werden.

Bei einer besonders bevorzugten Ausführungsform der Erfindung ist der Anlageabschnitt unter radialer Vorspannung in dem Führungsabschnitt angeordnet. Dadurch wird ein spielfreies Führen des Nockens innerhalb der Führung besonders zuverlässig gewährleistet. Mit dieser Ausführungsform wird erreicht, dass auch in unterschiedlichsten Temperaturbereichen auch bei dadurch bedingten unterschiedlichen Temperaturausdehnungen der verwendeten Materialien für die Führung und den Nocken eine spielfreie Führung des Nockens möglich ist.

Vorzugsweise ist zur Erzeugung der radialen Vorspannung zumindest bei nicht in die Führung eingeführtem Nocken der Durchmesser eines an die Berührungsflächen anliegenden, senkrecht zur Längsachse des Nockens angeordneten, gedachten Kreises wenigstens geringfügig kleiner als der Durchmesser des Anlageabschnitts. Der an die Berührungsflächen anliegende, gedachte Kreis kann als ein sogenannter Inkreis bezeichnet werden. Mit dieser Ausführungsform kann auf besonders einfache Weise eine Vorspannung realisiert werden, ohne dass besondere Elemente, beispielsweise Federelemente, hinzugefügt werden müssen.

Dabei ist es vorteilhaft, dass zur Erzeugung der radialen Vorspannung mindestens eine Berührungsfläche einen radial nach innen gerichteten Materialauftrag aufweist. Ein derartiger Materialauftrag verkleinert auf besonders einfache Weise den Durchmesser des Inkreises des Führungsabschnitts. Der Materialauftrag kann beispielsweise elastisch nachgiebig ausgebildet sein. Damit ist ein besonders einfaches Einführen des Nockens in die Führung möglich und es wird bei unterschiedlichen Temperaturen und den daraus folgenden unterschiedlichen Materialausdehnungen stets eine spielfreie Führung des Nockens ermöglicht.

In einer weiteren bevorzugten Ausführungsform ist mindestens eine der Berührungsflächen in radialer Richtung elastisch nachgiebig ausgestaltet. Beispielsweise ist der gesamte Führungsabschnitt aus einem elastisch nachgiebigen Kunststoff ausgebildet und erlaubt so eine besonders einfache Realisierung der Vorspannung.

Vorteilhafterweise ist die elastische Nachgiebigkeit durch die Wandstärke der Berührungsfläche und/oder durch mindestens eine Aussparung an einer Wandung der Berührungsfläche beeinflusst. Dies ermöglicht es, große Teile der Führung oder gar die gesamte Führung aus demselben Material herzustellen und lediglich für die Wandung einer oder mehrerer Berührungsflächen eine derart dünnere Wandstärke vorzusehen, dass eine radiale elastische Nachgiebigkeit der Berührungsflächen erreicht wird. Damit kann eine Führung, die eine spielfreie Aufnahme des Nockens erlaubt, besonders günstig hergestellt werden. Auch durch das Vorsehen einer Aussparung kann auf besonders einfache Weise eine elastische Nachgiebigkeit zumindest einer Berührungsfläche realisiert sein. Dabei kann die Aussparung in der Wandung beispielsweise quer zur Längsachse und annähernd tangential zum Querschnitt des Anlageabschnitts erfolgen. Es ist ferner vorstellbar, die Aussparung parallel zur Längsachse in einer Führungsfläche oder in mehreren Führungsflächen vorzusehen.

Vorteilhafterweise ist der Anlageabschnitt mindestens in einem eine Berührungsfläche berührenden Kontaktbereich elastisch radial nach innen nachgiebig ausgestaltet. Dies kann beispielsweise durch eine Reduzierung der Wandstärke des Anlageabschnitts in dem Kontaktbereich realisiert werden. Es ist auch vorstellbar, Aussparungen in dem Anlageabschnitt vorzusehen und somit eine radiale Nachgiebigkeit des Kontaktbereichs zu ermöglichen. Es ist ferner möglich, einen radial nachgiebigen Materialauftrag auf zumindest einen Kontaktbereich aufzubringen. Um eine freie Positionierung des Nockens um dessen Längsachse innerhalb der Führung zu gewährleisten, kann insbesondere auch die Oberfläche des gesamten Anlageabschnitts radial nach innen nachgiebig ausgestaltet sein. Dies kann dadurch erreicht werden, dass der Anlageabschnitt insgesamt aus einem elastisch nachgiebigen Material gebildet ist oder dass auf der Oberfläche des Anlageabschnitts ein elastisch nach innen nachgiebiger Materialauftrag aufgebracht ist.

In einer bevorzugten Ausführungsform sind mindestens ein Führungsabschnitt und ein mit dem Führungsabschnitt zusammenwirkender Anlageabschnitt in der Nähe des durch den Nockenabschnitt gebildeten Endes des Nockens angeordnet. Dadurch wird eine besonders sichere spielfreie und insbesondere verklemmungsfreie Führung des Nockens innerhalb der Führung ermöglicht.

Vorteilhafterweise ist in der Nähe des dem Nockenabschnitt abgewandten Endes des Nockens in der Führung ein Führungsbereich ausgebildet, in dem der Nocken axial verschiebbar geführt wird. Der Nocken kann beispielsweise innerhalb der Führung in zumindest zwei Bereichen, einem Führungsabschnitt, der in der Nähe des Nockenabschnitts ausgebildet sein kann, und einem Führungsbereich, der in der Nähe des dem Nockenabschnitt entgegen gesetzten Ende des Nockens ausgebildet ist, geführt werden. Dies ermöglicht eine besonders sichere und verklemmungsfreie Führung des Nockens innerhalb der Führung. Dabei kann auch der Anlagebereich als Anlageabschnitt ausgebildet sein und somit auch hier ein spielfreies Zusammenwirken mit dem Führungsabschnitt ermöglichen.

Vorzugsweise ist innerhalb der Führung eine in axialer Richtung des Nockens wirkende Feder ausgebildet, die sich an einer dem Nockenabschnitt zugewandten Seite des Führungsbereichs und an einer dem Führungsbereich zugewandten Seite des Anlagebereichs abstützt und mit dem Nocken derart zusammenwirkt, dass der Nockenabschnitt gegen die Steuerkulisse wirkt. Die Feder ist dabei so dimensioniert, dass die Reibungskraft des Nockens innerhalb der Führung überwunden wird. Dadurch wird stets das Zusammenwirken des Nockenabschnitts mit der Steuerkulisse gewährleistet.

Die Aufgabe wird auch durch einen Schalter der eingangs genannten Art dadurch gelöst, dass die Innenseite der Führung im Querschnitt eines mit dem Anlageabschnitt zusammenwirkenden Führungsabschnitts wenigstens annähernd kreisförmig ausgestaltet ist und dass der Anlageabschnitt im Querschnitt annähernd polygonartig angeordnete Anlageabschnittsflächen derart aufweist, dass je zwei benachbarte Anlageabschnittsflächen durch eine den Führungsabschnitt spielfrei berührende Kontaktfläche verbunden sind. Bei dieser Lösung berührt der in der Führung geführte Nocken die Führung lediglich mit den Kontaktflächen und damit in relativ kleinen Bereichen der Berührungsflächen des Führungsabschnitts. Damit kann eine spielfreie Führung des Nockens innerhalb der Führung realisiert werden und gleichzeitig die Reibung zwischen dem Nocken und der Führung möglichst gering gehalten werden, so dass eine axiale Bewegung des Nockens innerhalb der Führung besonders gut möglich ist.

Die im Querschnitt annähernd polygonartig ausgebildete Anlageabschnitt ist beispielsweise annähernd als ein Dreieck, Vierreck oder Fünfeck geformt. Durch die Wahl des Polygons wird die Anzahl der Kontaktbereiche bestimmt. Ist der Anlageabschnitt im Querschnitt als Dreieck ausgebildet, kann eine besonders geringe Reibungskraft zwischen dem Anlageabschnitt und dem Führungsabschnitt realisiert werden. Auch bei diesem erfindungsgemäßen Schalter bleibt die Möglichkeit einer Drehbarkeit des Nockens innerhalb der Führung um die Längsachse des Nockens bestehen.

Vorzugsweise verläuft die Berührung zwischen dem Führungsabschnitt und der Kontaktfläche wenigstens weitgehend linienartig in axialer Richtung. Damit wird die Fläche, in denen die Kontaktflächen den Führungsschnitt tatsächlich berühren, besonders klein, was zu einer Reduzierung der Reibungskräfte bei einer tangentialen Bewegung des Nockens innerhalb der Führung führt.

In einer bevorzugten Ausführungsform ist der Anlageabschnitt unter radialer Vorspannung in dem Führungsabschnitt angeordnet. Dadurch wird ein spielfreies Führen des Nockens innerhalb der Führung besonders zuverlässig gewährleistet.

Vorteilhafterweise ist zur Erzeugung der radialen Vorspannung zumindest bei nicht in die Führung eingeführtem Nocken der Innendurchmesser des Führungsabschnitts wenigstens geringfügig kleiner als der Durchmesser eines an den Kontaktflächen anliegenden, senkrecht zur Längsachse des Nockens angeordneten, gedachten Kreises. Der an den Kontaktflächen anliegende, gedachte Kreis kann als Umkreis des Anlageabschnitts bezeichnet werden. Mit dieser Ausführungsform kann auf besonders einfache Weise eine Vorspannung realisiert werden, ohne dass besondere Elemente, beispielsweise Federelemente, hinzugefügt werden müssen.

Vorzugsweise weist mindestens eine Kontaktfläche zur Erzeugung der radialen Vorspannung einen radial nach außen gerichteten Materialauftrag auf. Ein derartiger Materialauftrag vergrößert auf besonders einfache Weise den Durchmesser des Umkreises des Anlageabschnitts. Der Materialauftrag kann beispielsweise elastisch nachgiebig ausgebildet sein. Damit ist ein besonders einfaches Einführen des Nockens in die Führung möglich und es wird auch bei unterschiedlichen Temperaturen und den daraus folgenden unterschiedlichen Materialausdehnungen stets eine spielfreie Führung des Nockens ermöglicht.

In einer vorteilhaften Ausbildung des erfindungsgemäßen Schalters ist mindestens eine der Anlageabschnittsflächen radial nach innen elastisch nachgiebig ausgebildet. Dabei ist beispielsweise die gesamte Anlageabschnittsfläche aus einem elastisch nachgiebigen Kunststoff ausgebildet und erlaubt so eine besonders einfache Realisierung der Vorspannung. Insbesondere können mehrere Anlageabschnittsflächen elastisch nachgiebig ausgebildet sein. Des Weiteren ist es vorstellbar, dass der gesamte Anlageabschnitt radial nach innen elastisch nachgiebig ausgebildet ist. Insbesondere können auch ein oder mehrere der Kontaktflächen elastisch nachgiebig ausgebildet sein.

Vorteilhafterweise ist der Führungsabschnitt radial nach außen elastisch nachgiebig ausgebildet. Dies kann beispielsweise durch die Wandstärke des Führungsabschnitts erreicht werden. Es ist auch möglich, in dem Führungsabschnitt eine oder mehrere Aussparungen vorzusehen, die in axialer Richtung und/oder in zum Querschnitt des Führungsabschnitts tangentialer Richtung verlaufen.

In einer bevorzugten Ausführungsform sind mindestens ein Führungsabschnitt und ein mit dem Führungsabschnitt zusammenwirkender Anlageabschnitt in der Nähe des durch den Nockenabschnitt gebildeten Endes des Nockens angeordnet.

Vorteilhafterweise ist in der Nähe des dem Nockenabschnitt abgewandten Endes des Nockens in der Führung ein Führungsbereich ausgebildet, in dem der Nocken axial verschiebbar geführt wird.

Vorzugsweise ist innerhalb der Führung eine in axialer Richtung des Nockens wirkende Feder ausgebildet, die sich an einer dem Nockenabschnitt zugewandten Seite des Führungsbereichs und an einer dem Führungsbereich zugewandten Seite des Anlagebereichs abstützt und mit dem Nocken derart zusammenwirkt, dass der Nockenabschnitt gegen die Steuerkulisse wirkt.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Zeichnung zeigen:
- Fig. 1:: einen Längsschnitt durch ein eine Führung und einen Nocken umfassendes Schaltstück eines erfindungsgemäßen Schalters;
- Fig. 2:: ein schematische Draufsicht auf das Schaltstück aus Figur 1;
- Fig. 3:: einen Querschnitt durch den Führungsabschnitt und den Anlageabschnitt bei in die Führung eingeführtem Nocken in einer ersten Ausführungsform;
- Fig. 4:: einen Querschnitt durch den Führungsabschnitt und den Anlageabschnitt aus Figur 3, wobei der Nocken nicht in die Führung eingeführt ist;
- Fig. 5:: einen Querschnitt durch den Führungsabschnitt und den Anlageabschnitt in einer zweiten Ausführungsform, wobei der Nocken nicht in die Führung eingeführt ist;
- Fig. 6:: einen Querschnitt durch den Führungsabschnitt und den Anlageabschnitt bei in die Führung eingeführtem Nocken in einer dritten Ausführungsform;
- Fig. 7:: einen Querschnitt durch den Führungsabschnitt und den Anlageabschnitt bei in die Führung eingeführtem Nocken in einer vierten Ausführungsform; und
- Fig. 8:: einen Querschnitt durch den Führungsabschnitt und den Anlageabschnitt bei in die Führung eingeführtem Nocken in einer fünften Ausführungsform;

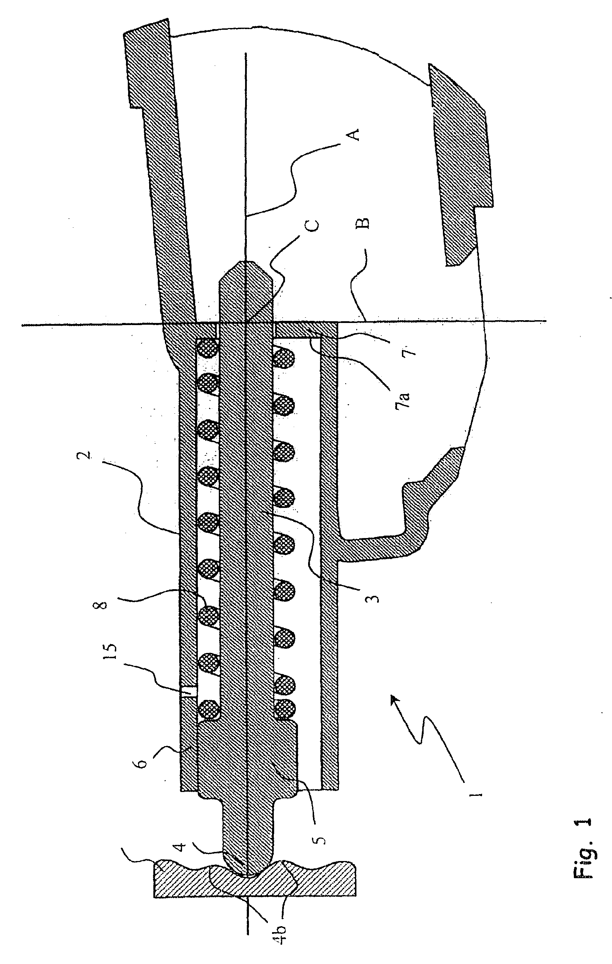

Fig. 1 zeigt einen Längsschnitt entlang einer Achse A und senkrecht zu einer Achse C durch ein Schaltstück 1, das Teil eines als Lenkstockschalter ausgebildeten erfindungsgemäßen Schalters ist. Das Schaltstück 1 weist eine hülsenartige Führung 2 und einen darin geführten Nocken 3 auf. An dem Nocken 3 sind ein Nockenabschnitt 4 und ein Anlageabschnitt 5 ausgebildet. Der Anlageabschnitt 5 berührt einen Führungsabschnitt 6, der an dem dem Nockenabschnitt 4 zugewandten Seite der Führung 2 ausgebildet ist. Die Führung 2 weist ferner an der dem Nockenabschnitt 4 entgegengesetzten Seite einen Führungsbereich 7 auf, in dem der Nocken mit dem dem Nockenabschnitt 4 abgewandten Ende geführt ist.

Der Nockenabschnitt 4 wirkt mit einer Steuerkulisse 4a zusammen. Durch dieses Zusammenwirken sind verschiedene Stellungen des Schaltstücks und verschiedene Funktionsstellungen realisierbar. Üblicherweise weist die Steuerkulisse 4a in dem Wirkbereich des Nockenabschnitts 4 unterschiedliche, dem Nockenabschnitt 4 entgegengerichtete Erhebungen 4b auf.

Eine Feder 8 wirkt derart auf den Nocken 3, dass der Nockenabschnitt 4 stets in Wirkkontakt mit der Steuerkulisse 4a steht. Dabei stützt sich die Feder 8 an der dem Nockenabschnitt 4 zugewandten Seite 7a des Führungsbereichs 7 ab.

Das Zusammenwirken des Nockens 3, der Feder 8 und der Steuerkulisse 4a ermöglicht die Realisierung von Raststellungen des Schaltstücks 1 und eine haptisch wahrnehmbare Rückmeldung über die aktuelle Schaltstellung während einer Betätigung des Schaltstücks 1 um eine Achse B oder C, die senkrecht zur Längsachse A des Nockens 3 angeordnet ist. Eine derartige Betätigung des Schaltstücks bewirkt eine Verlagerung des Nockens 3 entlang der Längsachse A innerhalb der Führung 2 entgegen der Federkraft der Feder 8, bedingt durch die in der Steuerkulisse 4a ausgebildeten unterschiedlichen Erhebungen 4b. Dies kann bei der Betätigung des Schaltstücks 1 in unterschiedlichen Stellungen unterschiedliche Betätigungskräfte erfordern. Dabei sind die benötigten Betätigungskräfte abhängig von der Position des Nockenabschnitts 4 innerhalb der Steuerkulisse 4a. Wird der Nockenabschnitt 4 in ansteigender Richtung auf die Erhebung 4b der Steuerkulisse 4a bewegt, so wird der Nocken 3 entgegen der Federkraft in der Führung 2 verlagert und es ist eine größere Betätigungskraft erforderlich, als wenn der Nockenabschnitt 4 in abfallender Richtung von einer Erhebung 4b weg bewegt wird und der Nocken 3 in Wirkrichtung der Federkraft verlagert wird.

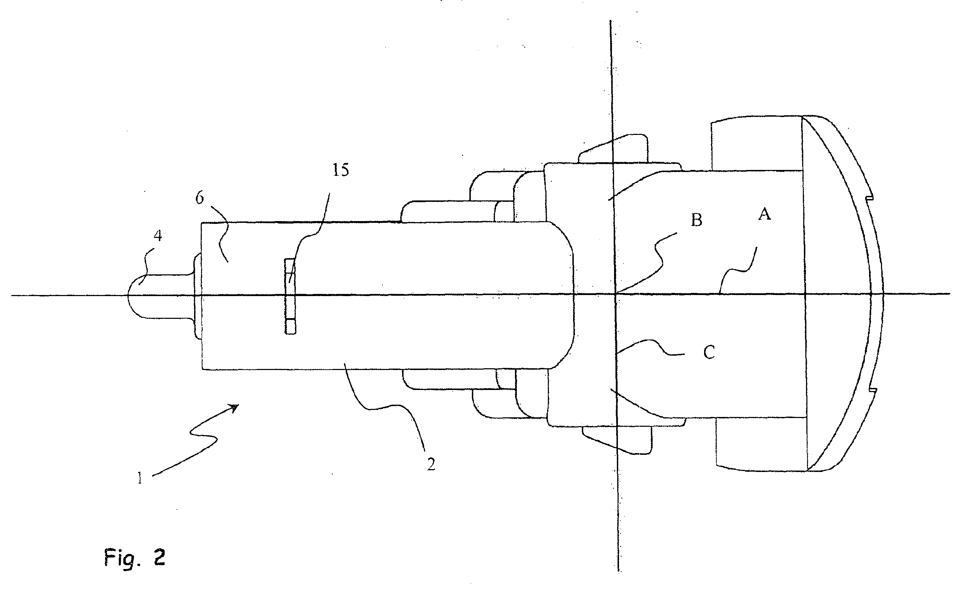

In Figur 2 ist eine schematische Draufsicht (Blickrichtung entlang der Achse B) auf das in der Figur 1 gezeigte Schaltstück dargestellt, wobei eine Achse C senkrecht zu der Achse B und der Längsachse A verläuft. Der Führungsabschnitt 6 weist eine auch in Figur 1 dargestellte Aussparung 15 auf, die senkrecht zu der Längsachse A verläuft und eine Nachgiebigkeit des Führungsabschnitts 6 unterstützt. Dies ist insbesondere vorteilhaft, wenn der Durchmesser des Umkreises des Anlageabschnitts 5 größer ist, als der Inkreis des Führungsabschnitts 6 bei nicht eingeführtem Nocken 3 in die Führung 2. Bei in der Führung 2 geführtem Nocken 3 bewirkt die Aussparung 15, dass einer Verformung des Führungsabschnitts 6 in dem Bereich der Aussparung 15 in Richtung der Achse B radial nach außen nur der Materialwiderstand des Führungsabschnitts 6 selbst gegenübersteht. Ohne die Aussparung 15 wären höhere Kräfte notwendig, um eine entsprechende Verformung des Führungsabschnitts 6 zu erreichen. Im Umkehrschluss bewirkt die Aussparung folglich, dass die Vorspannung, mit der der Nocken 3 in der Führung 2 geführt wird, geringer wird und somit eine spielfreie Bewegung des Nockens 3 in der Führung 2 möglich ist, bei der nur relativ geringe Reibungskräfte überwunden werden müssen. Mit dem Vorsehen der Aussparung 15 kann folglich eine für die Stabilität der gesamten Führung 2 notwendige Materialauswahl und Wandstärke erreicht werden und dennoch eine für die sichere spielfreie Führung des Nockens 3 notwendige Verformbarkeit des Führungsabschnitts 6 erreicht werden.

Es ist auch vorstellbar, dass sich die Aussparung 15 entlang der Längsachse A erstreckt. Eine derartige Ausbildung kann sich beispielsweise in Abhängigkeit von dem Material der Führung 2 oder dem Grad einer gewünschten Verformbarkeit als vorteilhaft erweisen.

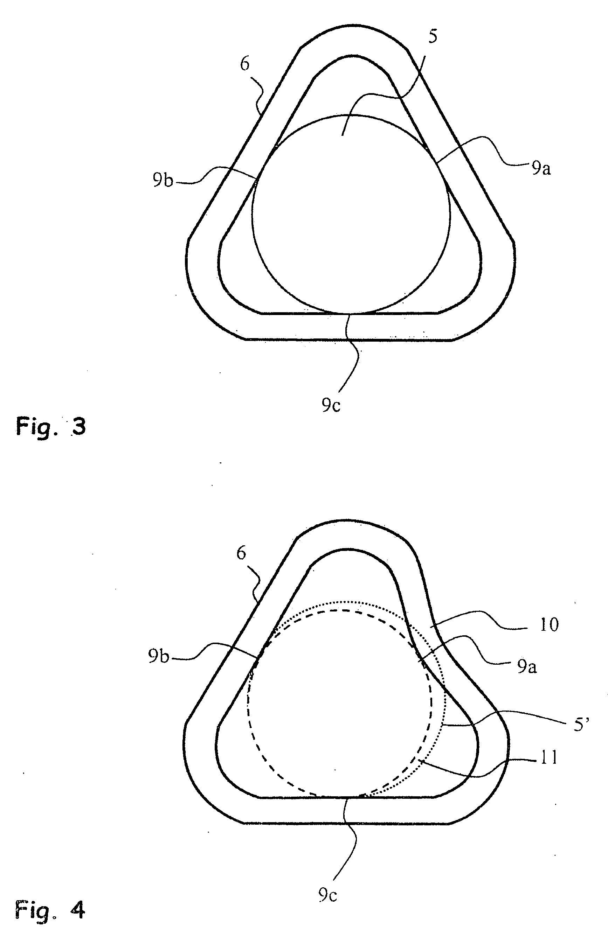

In Figur 3 ist ein Querschnitt durch den Führungsabschnitt 6 und den Anlageabschnitt 5 eines in die Führung eingeführten Nockens 3 dargestellt. Der im Querschnitt kreisförmig ausgebildete Anlageabschnitt 5 berührt den polygonartigen Führungsabschnitt 6 spielfrei an den im Querschnitt annähernd dreieckig angeordneten Berührungsflächen 9a, 9b, 9c.

In Figur 4 ist der Führungsabschnitt 6 aus Figur 3 bei nicht eingeführtem Nocken 3 dargestellt. Eine Wandung 10 der Berührungsfläche 9a ist derart elastisch ausgebildet, dass sie sich in diesem Zustand radial nach innen wölbt. Wird der Nocken 3 in den Führungsabschnitt 6 eingeführt und kommt der gestrichelt dargestellte Anlageabschnitt 5' mit den Berührungsflächen 9a, 9b, 9c zur Anlage, so wird die Wandung 10 radial nach außen verformt. Dadurch entsteht eine Vorspannung, unter der der Nocken 3 in der Führung 2 geführt ist. Die Wandung 10 kann dabei im Bereich der Berührungsfläche 9a eine geringere Wandstärke aufweisen, als die Wandungen der Berührungsflächen 9b, 9c und damit die elastische Nachgiebigkeit besonders einfach realisieren.

Durch die Wölbung der Wandung 10 nach innen wird erreicht, dass bei nicht eingeführtem Nocken 3 der Durchmesser eines gedachten Inkreises 11 kleiner ist, als der Durchmesser des gestrichelt dargestellten Anlageabschnitts 5'.

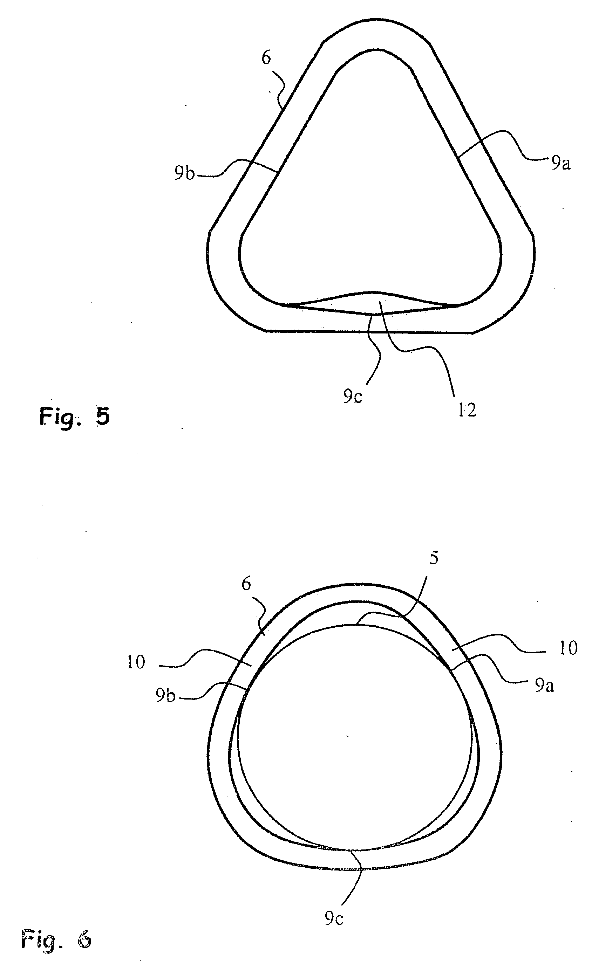

In Figur 5 ist eine Ausführungsform des erfindungsgemäßen Schalters dargestellt, bei dem zur Erzeugung einer Vorspannung die Berührungsfläche 9c einen Materialauftrag 12 aufweist. Der Materialauftrag 12 ist elastisch nachgiebig, so dass der Nocken 3 in die Führung 2 eingeführt werden kann und der Anlageabschnitt 5 zur Anlage an die Berührungsflächen 9a, 9b, 9c gebracht werden kann. Die elastische Nachgiebigkeit des Materialauftrags 12 erzeugt somit die für eine besonders sichere spielfreie Führung des Nockens 3 innerhalb der Führung 2 notwendige Vorspannung. Der Materialauftrag 12 kann aus demselben Material bestehen, wie die Wandung 10. Der Materialauftrag 12 kann jedoch insbesondere auch aus einem speziellen, beispielsweise besonders elastischen und/oder reibungsverminderndem Material bestehen.

Bei dem erfindungsgemäßen Schalter kann ferner vorgesehen sein, mehrere der Berührungsflächen 9a, 9b, 9c mit einem Materialauftrag 12 zu versehen oder mehrere der Wandungen 10 wie in Figur 4 gezeigt elastisch auszubilden. Es ist ferner möglich, eine oder mehrere der Berührungsflächen 9a, 9b, 9c mit einem elastisch nachgiebigen Materialauftrag 12 zu versehen und eine oder mehrere der Wandungen 10 wie in Figur 4 gezeigt elastisch auszubilden. Dabei können eine oder mehrere der Berührungsflächen 9a, 9b, 9c, deren Wandung 10 elastisch ausgebildet ist, zusätzlich mit einem Materialauftrag 12 versehen sein.

In Figur 6 ist eine Ausführungsform eines erfindungsgemäßen Schalters dargestellt, bei dem die Wandungen 10 der Führung 2 im Bereich der Berührungsflächen 9a, 9b, 9c radial nach außen verformt sind, wenn der Nocken 3 in die Führung 2 eingeführt sind und der Anlageabschnitt 5 mit den Berührungsflächen 9a, 9b, 9c zur Anlage gebracht ist. Diese Verformbarkeit kann durch die Wandstärke der Wandungen 10 erreicht werden. Selbstverständlich ist es möglich, nicht alle, sondern nur eine oder mehrere der Wandungen 10 derart auszugestalten, dass sie bei eingeführten Nocken 3 radial nach außen verformt sind.

Insbesondere ist es vorstellbar, die genannten Möglichkeiten zur Erzeugung der Vorspannung beliebig zu kombinieren. So kann eine radial nach innen gewölbte Wandung auch radial nach außen Verformbar sein und/oder mit dem Materialauftrag 12 versehen sein. Welche der dargestellten Möglichkeiten zur Erzeugung der Vorspannung realisiert und kombiniert werden, kann von den Materialien der Führung 2 und des Nockens 3, insbesondere des Führungsabschnitts 6 und des Anlageabschnitts 5, sowie bauartbedingter Faktoren abhängen. Die Vielfalt der Variationsmöglichkeiten des erfindungsgemäßen Schalters ermöglicht es, den Schalter auch bei beengten Platzverhältnissen, wie sie beispielsweise bei Lenkstockschaltern üblich sind, vorteilhaft einzusetzen.

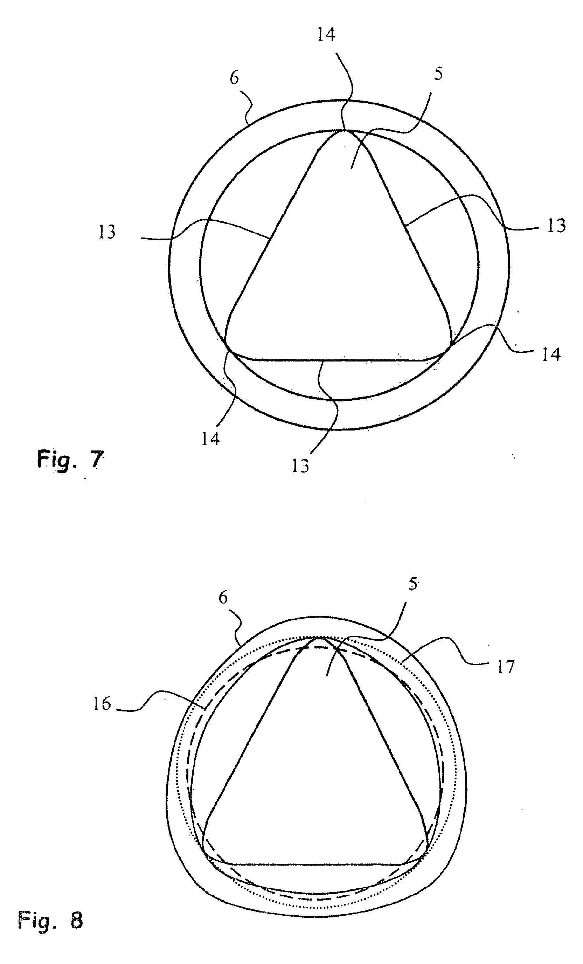

In Figur 7 ist eine weitere Ausführungsform eines erfindungsgemäßen Schalters wieder in einem Querschnitt senkrecht zur Längsachse A des Nockens 3 dargestellt. Dabei ist der mit dem Anlageabschnitt 5 zusammenwirkende Führungsabschnitt 6 annähernd kreisförmig ausgestaltet. Der Anlageabschnitt 5 weist im Querschnitt annähernd polygonartig angeordnete Anlageabschnittsflächen 13 derart auf, dass je zwei benachbarte Anlageabschnittsflächen 13 durch eine den Führungsabschnitt 6 spielfrei berührende Kontaktfläche 14 verbunden sind. Auch diese Ausführungsform gewährleistet eine spielfreie Bewegung des Nockens 3 in der Führung 2 und verhindert insbesondere bei unter Vorspannung in der Führung 2 geführtem Nocken 3 das Auftreten großer Reibungskräfte, da die Kontaktflächen 14 den Führungsabschnitt 6 nur in einer kleinen Fläche berühren. Andere polygonartige Anordnungen der Anlageabschnittsflächen 13, beispielsweise eine vier- oder fünfeckige Anordnung sind denkbar. Dabei wird die Anzahl der Kontaktflächen 14 entsprechend erhöht, was einerseits eine Erhöhung der Reibung, andererseits aber auch eine stabilere Führung des Nockens 3 in der Führung 2 zur Folge haben kann.

Eine Vorspannung kann beispielsweise wie in einer in Figur 8 dargestellten Ausführungsform erzeugt werden, bei der der Durchmesser des Inkreises 16 des Führungsabschnitts 6 bei nicht eingeführtem Nocken 3 kleiner ist, als der Durchmesser des Umkreises 17 des Querschnitts des Anlageabschnitts. Die Wandung 10 des Führungsabschnitts 6 ist zumindest soweit radial nach außen elastisch nachgiebig ausgebildet, dass der Nocken 3 in die Führung eingeführt werden kann und der Anlageabschnitt 5 an dem Führungsabschnitt 6 zur Anlage gebracht werden kann. Dabei wird der Nocken selbst nicht verformt. Die Vorspannung wird durch die elastische Verformung des Führungsabschnitts 6 radial nach außen erzeugt.

Es ist möglich, auf eine oder mehrere der Kontaktflächen 14 einen Materialauftrag aufzubringen. Dadurch kann beispielsweise eine Reibungsverminderung erreicht werden. Es ist insbesondere möglich, mittels des Materialauftrags eine Vergrößerung des Durchmessers des Umkreises des Querschnitts des Anlageabschnitts 5 bei nicht eingeführtem Nocken 3 gegenüber dem Innendurchmessers des Querschnitts des Führungsabschnitts 6 zu erreichen und so bei eingeführtem Nocken 3 eine Vorspannung zu erzeugen.

## Patentansprüche

1. Schalter, insbesondere Lenkstockschalter für ein Fahrzeug, der eine Steuerkulisse (4a) und einen mindestens teilweise in einer hülsenartigen Führung (2) gelagerten Nocken (3) umfasst, wobei der Nocken (3) in axialer Richtung in der Führung (2) bewegbar ist, einen mindestens teilweise innerhalb der Führung (2) geführten Anlageabschnitt (5) aufweist und einen der Steuerkulisse (4a) zugewandten und mit der Steuerkulisse (4a) zusammenwirkenden Nockenabschnitt (4) aufweist, **dadurch gekennzeichnet, dass** der Anlageabschnitt (5) im Querschnitt wenigstens annähernd kreisförmig ausgestaltet ist und dass die Innenseite der Führung (2) im Querschnitt wenigstens eines mit dem Anlageabschnitt (5) zusammenwirkenden Führungsabschnitts (6) annähernd polygonartig angeordnete und den Anlageabschnitt (5) spielfrei berührende Berührungsflächen (9a, 9b, 9c) aufweist.

2. Schalter nach Anspruch 1, **dadurch gekennzeichnet, dass** die Berührung zwischen Anlageabschnitt (5) und Berührungsflächen (9a, 9b, 9c) wenigstens weitgehend linienartig in axialer Richtung verläuft.

3. Schalter nach Anspruch 1 oder 2, **dadurch gekennzeichnet, dass** der Anlageabschnitt (5) unter radialer Vorspannung in dem Führungsabschnitt (6) angeordnet ist.

4. Schalter nach Anspruch 3, **dadurch gekennzeichnet, dass** zur Erzeugung der radialen Vorspannung zumindest bei nicht in die Führung (2) eingeführtem Nocken (3) der Durchmesser eines an die Berührungsflächen (9a, 9b, 9c) anliegenden, senkrecht zur Längsachse des Nockens (3) angeordneten, gedachten Kreises wenigstens geringfügig kleiner ist als der Durchmesser des Anlageabschnitts (5).

5. Schalter nach einem der Ansprüche 3 oder 4, **dadurch gekennzeichnet, dass** zur Erzeugung der radialen Vorspannung mindestens eine Berührungsfläche einen radial nach innen gerichteten Materialauftrag (12) aufweist.

6. Schalter nach einem der Ansprüche 3 bis 5, **dadurch gekennzeichnet, dass** mindestens eine der Berührungsflächen (9a, 9b, 9c) in radialer Richtung elastisch nachgiebig ausgestaltet ist.

7. Schalter nach einem der Ansprüche 3 bis 6, **dadurch gekennzeichnet, dass** die elastische Nachgiebigkeit durch die Wandstärke der Berührungsfläche und/oder durch mindestens eine Ausparung (15) an einer Wandung (10) der Berührungsfläche beeinflusst ist.

8. Schalter nach einem der vorangehenden Ansprüche, **dadurch gekennzeichnet, dass** der Anlageabschnitt (5) mindestens in einem eine Berührungsfläche berührenden Kontaktbereich elastisch radial nach innen nachgiebig ausgestaltet ist.

9. Schalter, insbesondere Lenkstockschalter für ein Fahrzeug, der eine Steuerkulisse (4a) und einen mindestens teilweise in einer hülsenartigen Führung (2) gelagerten Nocken (3) umfasst, wobei der Nocken (3) in axialer Richtung in der Führung (2) bewegbar ist, einen einer Innenseite der Führung (2) zugewandten Anlageabschnitt (5) aufweist, einen der Steuerkulisse (4a) zugewandten Nockenabschnitt (4) aufweist und mit der Steuerkulisse (4a) in dem Nockenabschnitt (4) zusammenwirkt, **dadurch gekennzeichnet**, die Innenseite der Führung (2) im Querschnitt eines mit dem Anlageabschnitt (5) zusammenwirkenden Führungsabschnitts (6) wenigstens annähernd kreisförmig ausgestaltet ist und dass der Anlageabschnitt (5) im Querschnitt annähernd polygonartig angeordnete Anlageabschnittsflächen (13) derart aufweist, dass je zwei benachbarte Anlageabschnittsflächen (13) durch eine den Führungsabschnitt (6) spielfrei berührende Kontaktfläche (14) verbunden sind.

10. Schalter nach Anspruch 9, **dadurch gekennzeichnet, dass** die Berührung zwischen dem Führungsabschnitt (6) und der Kontaktfläche (14) wenigstens weitgehend linienartig in axialer Richtung verläuft.

11. Schalter nach Anspruch 9 oder 10, **dadurch gekennzeichnet, dass** der Anlageabschnitt (5) unter radialer Vorspannung in dem Führungsabschnitt (6) angeordnet ist.

12. Schalter nach Anspruch 11, **dadurch gekennzeichnet, dass** zur Erzeugung der radialen Vorspannung zumindest bei nicht in die Führung (2) eingeführtem Nocken (3) der Innendurchmesser des Führungsabschnitts (6) wenigstens geringfügig kleiner ist als der Durchmesser eines an die Kontaktflächen (14) anliegenden, senkrecht zur Längsachse des Nockens (3) angeordneten, gedachten Kreises.

13. Schalter nach einem der Ansprüche 11 oder 12, **dadurch gekennzeichnet, dass** zur Erzeugung der radialen Vorspannung mindestens eine Kontaktfläche (14) einen radial nach außen gerichteten Materialauftrag (12) aufweist.

14. Schalter nach einem Ansprüche 11 bis 13, **dadurch gekennzeichnet, dass** mindestens eine der Anlageabschnittsflächen (13) elastisch nachgiebig ausgebildet ist.

15. Schalter nach einem der Ansprüche 13 bis 16, **dadurch gekennzeichnet**, der Führungsabschnitt (6) radial nach außen elastisch nachgiebig ausgebildet ist.

16. Schalter nach einem der vorangehenden Ansprüche, **dadurch gekennzeichnet, dass** mindestens ein Führungsabschnitt (6) und ein mit dem Führungsabschnitt (6) zusammenwirkender Anlageabschnitt (5) in der Nähe des durch den Nockenabschnitt (4) gebildeten Endes des Nockens (3) angeordnet sind.

17. Schalter nach einem der vorangehenden Ansprüche, **dadurch gekennzeichnet, dass** in der Nähe des dem Nockenabschnitt (4) abgewandten Endes des Nockens (3) in der Führung (2) ein Führungsbereich ausgebildet ist, in dem der Nocken (3) axial verschiebbar geführt wird.

18. Schalter nach Anspruch 17, **dadurch gekennzeichnet, dass** innerhalb der Führung (2) eine in axialer Richtung des Nockens (3) wirkende Feder (8) ausgebildet ist, die sich an der dem Nockenabschnitt (4) zugewandten Seite des Führungsbereichs und an der dem Führungsbereich zugewandten Seite des Anlageabschnitts (5) abstützt und mit dem Nocken (3) derart zusammenwirkt, dass der Nockenabschnitt (4) gegen die Steuerkulisse (4a) wirkt.

## Claims

1. A switch, in particular a steering column switch for a vehicle, which comprises a selector slot (4a) and a cam (3) that is mounted at least partially in a sleeve-type guide (2), the cam (3) being moveable in the axial direction in the guide (2), comprising a bearing portion (5) that is guided at least partially inside the guide (2) and comprising a cam portion (4) facing the selector slot (4a) and interacting with the selector slot (4),
**characterised in that** the bearing portion (5) is designed with a cross section that is at least approximately circular
**and in that** the inner side of the guide (2) comprises contact areas (9a, 9b, 9c) that are disposed with an approximately polygonal cross section of at least one guide portion (6) interacting with the bearing portion (5) and that touch the bearing portion (5) in a manner free from play.

2. A switch according to Claim 1,
**characterised in that** the contact between the bearing portion (5) and the contact areas (9a, 9b, 9c) extends at least largely in linear fashion in the axial direction.

3. A switch according to Claim 1 or 2,
**characterised in that** the bearing portion (5) is disposed with radial bias in the guide portion (6).

4. A switch according to Claim 3,
**characterised in that** to produce the radial bias, at least when a cam (3) is not inserted into the guide (2), the diameter of an imaginary circle that bears against the contact areas (9a, 9b, 9c) and is disposed perpendicularly to the longitudinal axis of the cam (3) is at least slightly smaller than the diameter of the bearing portion (5).

5. A switch according to one of Claims 3 or 4,
**characterised in that** to produce the radial bias at least one contact area comprises a radially inwardly directed application of material (12).

6. A switch according to one of Claims 3 to 5,
**characterised in that** at least one of the contact areas (9a, 9b, 9c) is designed to be elastically resilient in the radial direction.

7. A switch according to one of Claims 3 to 6,
**characterised in that** the elastic resilience is influenced by the wall thickness of the contact area and/or by at least one recess (15) on a wall (10) of the contact area.

8. A switch according to one of the preceding Claims,
**characterised in that** the bearing portion (5) is designed to be elastically radially inwardly resilient at least in a contact region touching a contact area.

9. A switch, in particular a steering column switch for a vehicle, which comprises a selector slot (4a) and a cam (3) mounted at least partially in a sleeve-type guide (2), the cam (3) being movable in the axial direction in the guide (2), comprising a bearing portion (5) facing an inner side of the guide (2), comprising a cam portion (4) facing the selector slot (4a) and interacting with the selector slot (4a) in the cam portion (4),
**characterised in that** the inner side of the guide (2) is designed with an at least approximately circular cross section of a guide portion (6) interacting with the bearing portion (5)
**and in that** the bearing portion (5) comprises bearing portion surfaces (13) that are disposed with an approximately polygonal cross section in such a manner that two adjacent bearing portion surfaces (13) are connected by a contact area (14) that touches the guide portion (6) in a manner free from play.

10. A switch according to Claim 9,
**characterised in that** the contact between the guide portion (6) and the contact area (14) extends at least largely in linear fashion in the axial direction.

11. A switch according to Claim 9 or 10,
**characterised in that** the bearing portion (5) is disposed with radial bias in the guide portion (6).

12. A switch according to Claim 11,
**characterised in that** to produce the radial bias, at least when a cam (3) is not inserted into the guide (2), the inner diameter of the guide portion (6) is at least slightly smaller than the diameter of an imaginary circle that bears against the contact areas (14) and is disposed perpendicularly to the longitudinal axis of the cam (3).

13. A switch according to one of Claims 11 or 12,
**characterised in that** at least one contact area (14) comprises a radially outwardly directed application of material (12) to produce the radial bias.

14. A switch according to one of Claims 11 to 13,
**characterised in that** at least one of the bearing portion surfaces (13) is designed to be elastically resilient.

15. A switch according to one of Claims 13 to 16,
**characterised in that** the guide portion (6) is designed to be radially outwardly elastically resilient.

16. A switch according to one of the preceding Claims,
**characterised in that** at least one guide portion (6) and a bearing portion (5) interacting with the guide portion (6) are disposed in the vicinity of the end of the cam (3) formed by the cam portion (4).

17. A switch according to one of the preceding Claims,
**characterised in that** a guide region, in which the cam (3) is guided with axial displaceability, is provided in the guide (2) in the vicinity of the end of the cam (3) remote from the cam portion (4).

18. A switch according to Claim 17,
**characterised in that** inside the guide (2) is provided a spring (8) that acts in the axial direction of the cam (3), is supported on the side of the guide region facing the cam portion (4) and on the side of the bearing portion (5) facing the guide region and interacts with the cam (3) in such a manner that the cam portion (4) acts against the selector slot (4a).

## Revendications

1. Commutateur, en particulier commutateur de colonne de direction destiné à un véhicule, comportant une coulisse de commande (4a) et une came (3) logée au moins partiellement dans un guide (2) en forme de tube, la came (3) pouvant se déplacer dans le guide (2) dans le sens axial et présentant un tronçon d'appui (5) guidé au moins partiellement à l'intérieur du guide (2) ainsi qu'un tronçon de came (4) tourné vers la coulisse de commande (4a) et coopérant avec la coulisse de commande (4a), **caractérisé en ce que** le tronçon d'appui (5) est conformé en coupe transversale au moins à peu près de façon circulaire et **en ce que** le côté intérieur du guide (2) présente en coupe transversale au moins un tronçon de guidage (6) coopérant avec le tronçon d'appui (5), avec des surfaces de contact (9a, 9b, 9c) disposées à peu près en forme de polygone et touchant sans jeu le tronçon d'appui (5).

2. Commutateur selon la revendication 1, **caractérisé en ce que** le contact entre le tronçon d'appui (5) et les surfaces de contact (9a, 9b, 9c) est au moins largement linéaire dans le sens axial.

3. Commutateur selon la revendication 1 ou 2, **caractérisé en ce que** le tronçon d'appui (5) est disposé sous précontrainte radiale dans le tronçon de guidage (6).

4. Commutateur selon la revendication 3, **caractérisé en ce que**, pour générer la précontrainte radiale, le diamètre d'un cercle imaginaire disposé perpendiculairement à l'axe longitudinal de la came (3) de manière adjacente aux surfaces de contact (9a, 9b, 9c) est au moins légèrement plus petit que le diamètre du tronçon d'appui (5), du moins lorsque la came (3) n'est pas insérée dans le guide (2).

5. Commutateur selon l'une des revendications 3 ou 4, **caractérisé en ce que**, pour générer la précontrainte radiale, au moins une surface de contact présente un apport de matière (12) dirigé radialement vers l'intérieur.

6. Commutateur selon l'une quelconque des revendications 3 à 5, **caractérisé en ce qu'**au moins une des surfaces de contact (9a, 9b, 9c) est conformée de façon à se déformer élastiquement dans le sens radial.

7. Commutateur selon l'une quelconque des revendications 3 à 6, **caractérisé en ce que** la déformation élastique est influencée par l'épaisseur de paroi de la surface de contact et/ou par au moins un évidement (15) dans une paroi (10) de la surface de contact.

8. Commutateur selon l'une quelconque des revendications précédentes, **caractérisé en ce que** le tronçon d'appui (5) est conformé de façon à se déformer élastiquement radialement vers l'intérieur au moins dans une zone de contact touchant une surface de contact.

9. Commutateur, en particulier commutateur de colonne de direction destiné à un véhicule, comportant une coulisse de commande (4a) et une came (3) logée au moins partiellement dans un guide (2) en forme de tube, la came (3) pouvant se déplacer dans le guide (2) dans le sens axial et présentant un tronçon d'appui (5) tourné vers un côté intérieur du guide (2) ainsi qu'un tronçon de came (4) tourné vers la coulisse de commande (4a) et coopérant avec la coulisse de commande (4a), **caractérisé en ce que** le côté intérieur du guide (2) est conformé en coupe transversale au moins à peu près de façon circulaire avec un tronçon de guidage (6) coopérant avec le tronçon d'appui (5) et **en ce que** le tronçon d'appui (5) présente des surfaces (13) de tronçon d'appui disposées en coupe transversale à peu près en forme de polygone, de telle sorte que deux surfaces (13) voisines de tronçon d'appui soient chaque fois reliées par une surface de contact (14) touchant sans jeu le tronçon de guidage (6).

10. Commutateur selon la revendication 9, **caractérisé en ce que** le contact entre le tronçon de guidage (6) et la surface de contact (14) est au moins largement linéaire dans le sens axial.

11. Commutateur selon la revendication 9 ou 10, **caractérisé en ce que** le tronçon d'appui (5) est disposé sous précontrainte radiale dans le tronçon de guidage (6).

12. Commutateur selon la revendication 11, **caractérisé en ce que**, pour générer la précontrainte radiale, le diamètre intérieur du tronçon de guidage (6) est, du moins lorsque la came (3) n'est pas insérée dans le guide (2), au moins légèrement plus petit que le diamètre d'un cercle imaginaire disposé perpendiculairement à l'axe longitudinal de la came (3) de manière adjacente aux surfaces de contact (14).

13. Commutateur selon l'une des revendications 11 ou 12, **caractérisé en ce que**, pour générer la précontrainte radiale, au moins une surface de contact (14) présente un apport de matière (12) dirigé radialement vers l'extérieur.

14. Commutateur selon l'une quelconque des revendications 11 à 13, **caractérisé en ce qu'**au moins une des surfaces (13) du tronçon d'appui est conformée de façon à se déformer élastiquement.

15. Commutateur selon l'une quelconque des revendications 13 à 16, **caractérisé en ce que** le tronçon de guidage (6) est conformé de façon à se déformer élastiquement radialement vers l'extérieur.

16. Commutateur selon l'une quelconque des revendications précédentes, **caractérisé en ce qu'**au moins un tronçon de guidage (6) et un tronçon d'appui (5) coopérant avec le tronçon de guidage (6) sont disposés dans le voisinage de l'extrémité de la came (3) formée par le tronçon de came (4).

17. Commutateur selon l'une quelconque des revendications précédentes, **caractérisé en ce qu'**une zone de guidage, dans laquelle la came (3) est guidée de façon à pouvoir se déplacer axialement, est conformée dans le guide (2) dans le voisinage de l'extrémité de la came (3) détournée du tronçon de came (4).

18. Commutateur selon la revendication 17, **caractérisé en ce qu'**un ressort (8) agissant dans le sens axial de la came (3), lequel s'appuie sur le côté de la zone de guidage tourné vers le tronçon de came (4) et sur le côté du tronçon d'appui (5) tourné vers la zone de guidage et coopère avec la came (3) de telle sorte que le tronçon de came (4) agisse contre la coulisse de commande (4a), est conformé à l'intérieur du guide (2).
